# NEUE EUROPÄISCHE PATENTSCHRIFT

(11) **EP 2 046 479 B2**
(45) Veröffentlichungstag und Bekanntmachung des Hinweises auf die Entscheidung über den Einspruch: **13.01.2016**
(45) Hinweis auf die Patenterteilung: 27.02.2013
(21) Anmeldenummer: 07787647.2
(22) Anmeldetag: 17.07.2007
(51) Int. Cl.: B01D 46/24, B01D 46/00

(54) **LUFTFILTEREINHEIT MIT EINEM RADIAL GETEILTEN GEHÄUSE**
AIR FILTER UNIT HAVING A RADIALLY DIVIDED HOUSING
UNITÉ DE FILTRATION D'AIR AVEC UN BOÎTIER DIVISÉ RADIALEMENT

(30) Priorität: 03.08.2006 DE 202006011991 U
(43) Veröffentlichungstag der Anmeldung: 15.04.2009
(73) Patentinhaber: MANN + HUMMEL GMBH, 71638 Ludwigsburg (DE)
(72) Erfinder: DWORATZEK, Klemens, 68535 Edingen (DE); BAUDER, Ralf, 68775 Ketsch (DE); ACKERMANN, Steffen, 67166 Otterstadt (DE)
(74) Vertreter: Schmitz, Alexander
(86) Internationale Anmeldenummer: PCT/EP2007/057381
(87) Internationale Veröffentlichungsnummer: WO 2008/015100

(56) Entgegenhaltungen:
- EP-A- 1 839 723
- WO-A-01/91884
- GB-A- 933 852
- US-A- 5 800 581
- US-A- 6 153 098
- US-A1- 2004 134 171
- US-B1- 6 481 580
- US-B1- 6 485 635

## Beschreibung

### Technisches Gebiet

Die Erfindung betrifft ein Luftfilterelement mit einem Filterbalg, der endseitig jeweils mit einer Endscheibe abgedeckt ist und eine Luftfiltereinheit mit einem Luftfilterelement.

### Stand der Technik

Luftfiltereinheiten sind bekannt, die ein im Wesentlichen zylindrisches Gehäuse umfassen, das an wenigstens einer Stirnseite durch Abnahme eines Deckels oder dergleichen geöffnet werden kann, um das zylindrisch ausgebildete Filterelement entnehmen und austauschen zu können. Zur Verbindung von Gehäuse- und Deckelelement sind Schraubverbindungen bekannt. Hierzu muss der Deckelrand aber frei zugänglich sein und randseitig mit einer haftungserhöhenden Struktur versehen sein, beispielsweise einer Rändelung, damit der Deckel von Hand beidseitig ergriffen und losgedreht werden kann. Es muss somit für den Wartungsfall zusätzlicher Bauraum seitlich der Filtereinheit bereitgestellt werden.

Außerdem müssen mehrere Gewindegänge vorgesehen sein, um eine ausreichend feste Verschraubung bewirken zu können, so dass das Losschrauben des Deckels entsprechend viel Zeit benötigt. Beim Aufschrauben des Deckels ist zusätzlich darauf zu achten, dass die Gewindegänge von Deckeln und Gehäuse ineinander eingeführt werden.

Weiterhin ist es bekannt, Zugankerelemente zwischen einem Gehäuseboden und einem Deckel vorzusehen. Dieses kann beispielsweise als Gewindestange ausgebildet sein, die durch den Deckel hindurch geht und mittels Flügelmuttern den Deckel an das Gehäuse presst. Auch hier besteht der Nachteil im hohen Zeitbedarf für das Lösen und Festschrauben des Zugankerelements, wie auch an den Kosten für das zusätzliche Zugankerelement, das darüber hinaus auch noch ein Strömungshindernis im durchströmten Inneren des Luftfilterelements bildet.

Aufgabe der Erfindung ist es somit, ein Filterelement anzugeben, das schneller ein- uns ausbaubar ist.

### Offenbarung der Erfindung

Diese Aufgabe wird gemäß einer ersten Ausführungsform durch ein Luftfilterelement mit den Merkmalen des Anspruchs 1 gelöst.

Kerngedanke der Erfindung ist somit, dass das in ein Gehäuse eingesetzte zylindrische Filterelement ermöglicht, dass die Gehäuseteile untereinander bzw. das Gehäuse und ein zugehöriger Deckel über das Filterelement kommunizieren können, das heißt, es wird mit dem Filterelement eine formschlüssige Verbindung zwischen den miteinander zu verbindenden Gehäuseteilen geschaffen, bei welcher das Filterelement als Zuganker dient und eine formschlüssige Kopplung bewirkt. Die Endscheiben sind dabei über ein den Filterbalg überspannendes Stabilisierungselement verbunden, welches als Mittelrohr ausgebildet ist, das sich durch eine zentrale Ausnehmung im Filterbalg erstreckt. Zusätzliche Zugankerelemente können dadurch entfallen. Wesentlich ist zudem, dass eine Verbindung von Gehäuseteilen ohne eingesetztes und nach der Erfindung ausgebildetes Filterelement nicht möglich ist, da dann die Gehäuseteile schlichtweg auseinanderfallen würden. Es ist damit insbesondere nicht möglich, die Luftfiltereinheit vorsätzlich oder fahrlässig ohne eingesetztes Luftfilterelement zu betreiben.

Im Bereich der Überdeckung durch den Filterbalg ist das Mittelrohr gelocht, geschlitzt oder mit anderen Öffnungen versehen. Das Mittelrohr kann auch zweiteilig aufgebaut sein, sofern die Verbindung der Einzelteile eine Übertragung von Zugkräften ermöglicht.

Die Endscheiben brauchen bei dieser Ausführungsform nicht massiv ausgebildet sein. Auch flexible folienartige Abdeckungen der Stirnseiten des Filterbalgs oder ein Porenverschluss über Vergussmassen sind hier möglich.

Erfindungsgemäß ist vorgesehen, dass das Filterelement als Kopplungselement einen Gewindeabsatz an einer Endscheibe mit einem konischen Gewinde aufweist.

Aufgrund der Konizität des Gewindeabsatzes und einer dazu kompatiblen Gewindebohrung am Gehäuse ist eine Selbstzentrierung gegeben, wenn das Luftfilterelement auf das Gehäuseelement geschoben wird. Es genügt dann eine Drehung um einen relativ kleinen Winkel, um eine Vielzahl von Gewindegängen miteinander in Eingriff zu bringen und so eine entsprechend hohe Festigkeit der Gewindeverbindung gegenüber axialen Kräften zu bewirken.

Als vorteilhaft hat sich hier ein Sägezahngewinde erwiesen, welches gut als Bewegungsgewinde geeignet ist, welches schmutzunempfindlich ist und welches sich darüber hinaus leicht bewegen lässt. Beispielsweise ist ein konisches Sägezahngewinde geeignet, das bei einem Durchmesser von ca. 100 mm 4 bis 5 Gewindegänge aufweist, die in einem Kegelwinkel von 3° bis 12° angeordnet sind.

Erfindungsgemäß weist ein Kopplungsabsatz wenigstens eine sich radial öffnende Eingriffsausnehmung auf, welche zum Eingriff mit wenigstens einem radial verschiebbaren Riegelelement vorgesehen ist.

Vorzugsweise wird die Verbindung zwischen dem Filterelement und einem der Gehäuseteile in der beschriebenen Weise mit einem konischen Gewinde ausgebildet. Um das Filterelement seitlich greifen und drehen zu können steht ein ausreichend großer Raum zur Verfügung, der zumindest dem Außendurchmesser des auf das Gehäuseoberteil aufzusetzenden Gehäuseunterteils entspricht.

Grundsätzlich ist es möglich, das Filterelement auch mit beiden Gehäuseteilen über ein konisches Gewinde mit dem Filtereinsatzelement in Verbindung zu bringen. Bei zwei Gewinden kann sich allerdings eine nicht vorhersehbare Winkellage der miteinander verschraubten Gehäuseteile ergeben. Bevorzugt ist daher wenigstens ein Kopplungselement am Filterelement so ausgebildet, dass verschiedene Winkellagen der anzukoppelnden Gehäuseteile möglich sind. Dies wird beispielsweise über eine Bajonettverbindung mit in gleichen Winkelabständen angeordneten Rastaufnahmen erreicht.

Möglich ist auch, eine Schnappverbindung, insbesondere eine Ringschnappverbindung, vorzusehen, die besonders dann vorteilhaft ist, wenn Filterelement und Gehäuseunterteil bzw. Deckel als unlösbare Einheit im Wartungsfall ersetzt werden. Das Filterelement ist dann geeignet, mit einem Gehäuseteil - lösbar oder unlösbar - verrastet zu werden.

Eine bevorzugte Ausführungsform sieht an wenigstens einer Verbindungsstelle wenigstens ein radial verschiebbares Riegelelement vor, das bis in die radial öffnende Eingriffsausnehmung, z. B. eine Rille, einen Hinterschnitt oder eine sonstige Eingriffsausnehmung an einem Absatz an der Endscheibe des Luftfilterelements eingeschoben werden kann, wodurch das Filterelement mit einem Gehäuseteil formschlüssig verriegelt wird.

Sofern die Eingriffsausnehmung am Luftfilterelement als eine durchgängige Rille ausgebildet ist, ist eine beliebige Positionierung des Filterelements gegenüber dem Gehäuseteil möglich. Auch die umgekehrte Anordnung ist möglich, bei der wenigstens ein Kopplungselement am Filterelement als Riegelelement ausgebildet ist, das in kompatible Ausnehmungen im Gehäuse eingreifen kann.

Auch bei den Ausführungsformen mit den verschiebbaren Riegelelementen ist ein Zusammenhalt des Gehäuses ohne das eingesetzte Filterelement und damit ein Betrieb der Filtereinheit ohne Luftfilterelement nicht möglich. Kurze Beschreibung der Zeichnungen

Die Erfindung wird nachfolgend mit Bezug auf die Zeichnung näher erläutert. Die Figuren zeigen im Einzelnen:
- Fig. 1: ein Filterelement in schematischer Seitenansicht,
- Fig. 2: einen Schnitt durch ein in ein Luftfiltergehäuse eingesetztes Filterelement entsprechend einer ersten Ausführungsform,
- Fig. 3: einen Schnitt durch das Luftfiltergehäuse mit Filterelement in perspektivischer Ansicht,
- Fig. 4,5: jeweils eine perspektivische Ansicht des geschlossenen Luftfiltergehäuses,
- Fig. 6: das Luftfiltergehäuse in perspektivischer Ansicht mit einem abgenommenen Gehäuseteil und
- Fig. 7: einen Schnitt durch ein in ein Luftfiltergehäuse eingesetztes Filterelement entsprechend einer zweiten Ausführungsform.

### Ausführungsform(en) der Erfindung

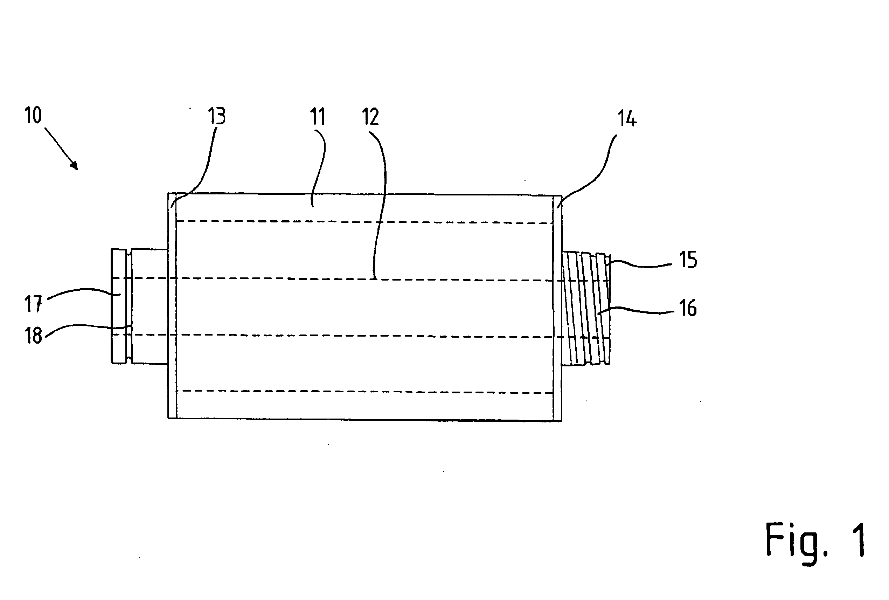

Figur 1 zeigt ein Filterelement 10, das einen Filterbalg 11 umfasst, der beispielsweise aus einem plissierten Filterpapier gebildet ist, welches zu einem Zylinderrohrkörper gewickelt ist. Der Filterbalg 11 ist an seinen beiden Enden mit Endscheiben 13, 14 verbunden und bildet mit diesen zusammen einen zylindrischen, hohlen Körper.

Die Endscheibe 14 besitzt einen Absatz 15 mit einem Gewinde 16 als Kopplungselement. Der Absatz 15 ist konisch mit einem Kegelwinkel von 8° bis 12° in Bezug auf die Mittelachse ausgebildet. An der Endscheibe 13 des Filterelements 10 ist ein Absatz 17 angeformt, der im dargestellten Ausführungsbeispiel mit einer Rille 18 als Eingriffsausnehmung versehen ist.

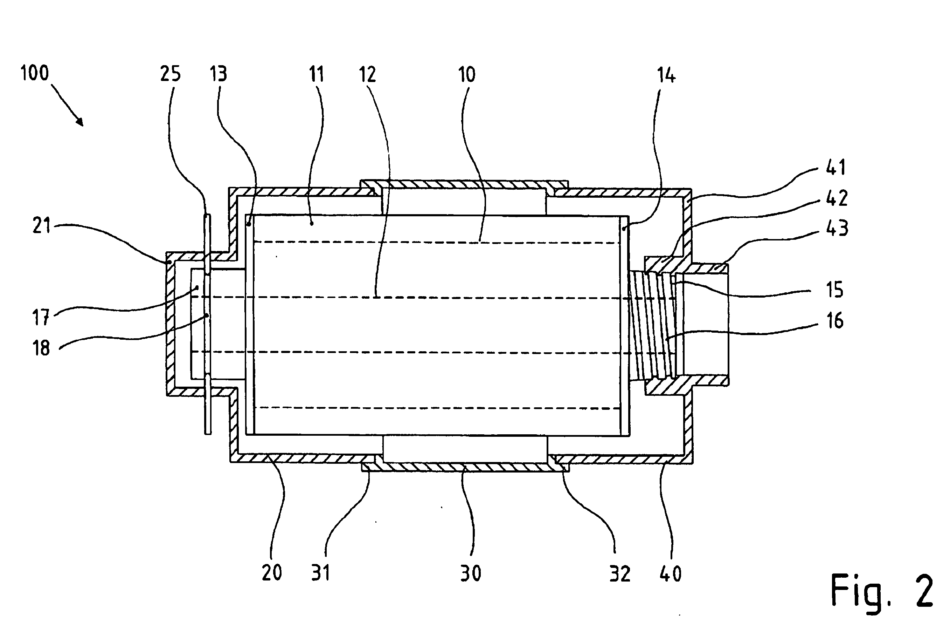

In Fig. 2 ist das Filterelement 10 innerhalb einer Luftfiltereinheit 100 in einer weiteren schematischen Schnittdarstellung gezeigt. Ein Gehäuse ist aus drei Gehäuseteilen 20, 30, 40 gebildet.

Gegenüberliegend befindet sich an einem Bodenabschnitt 41 eines Gehäuseteils 40 ein Absatz 42, der mit einem konischen Innengewinde versehen ist, in welches das Außengewinde 16 des Absatzes 15 eingreifen kann. Über das Gewinde als Kopplungselement können Filterelement 10 und Gehäuseteil 40 fest miteinander verbunden werden.

Auf das Gehäuseteil 40 ist an einer Verbindungsstelle 32 ein mittleres Gehäuseteil 30 aufgeschoben, ohne jedoch fest mit dem Gehäuseteil 40 verbunden zu sein. In gleicher Weise ist ein Gehäuseteil 20 an einer Verbindungsstelle 31 mit dem Gehäuseteil 30 verbunden.

Alle Gehäuseteile 20, 30, 40 sind nur lose zusammengesteckt und schließen das Filterelement 10 in dem gemeinsam ausgebildeten Gehäuse ein.

Am Gehäuseteil 20 sind Riegelelemente 25 vorgesehen, welche in radialer Richtung durch Ausnehmungen im Gehäuseteil 20 eingeschoben werden können, bis sie in die Rille 18 bzw. eine andere Eingriffsausnehmung eingreifen. Durch den Eingriff der Riegelelemente 25 in den Absatz 17 erfolgt eine axiale Festlegung des Gehäuseteils 20 gegenüber dem Filterelement 10. Da letzteres zugleich über die Gewindeverbindung 16, 42 mit dem auf der gegenüberliegenden Seite angeordneten Gehäuseteil 40 verbunden ist, werden die Gehäuseteile 20, 40 samt des zwischen ihnen liegenden weiteren Gehäuseteils 30 aneinander gehalten. Bei einer Druckbeaufschlagung des Gehäuseinnenraums im Betrieb wird das Filterelement auf Zug beansprucht und hält die Gehäuseteile 20, 30, 40 zusammen, welche ansonsten in axialer Richtung nicht miteinander gekoppelt sind.

Um am Filterelement 10 die mechanische Beanspruchung des Filterbalgs 11 gering zu halten, enthält das Filterelement 10 bevorzugt ein Mittelrohr 12, dessen Inneres einen Strömungskanal bildet und das zugleich die Länge zwischen den Endscheiben 13, 14 überbrückt, um so Kräfte zwischen den Absätzen 17, 15 zu übertragen.

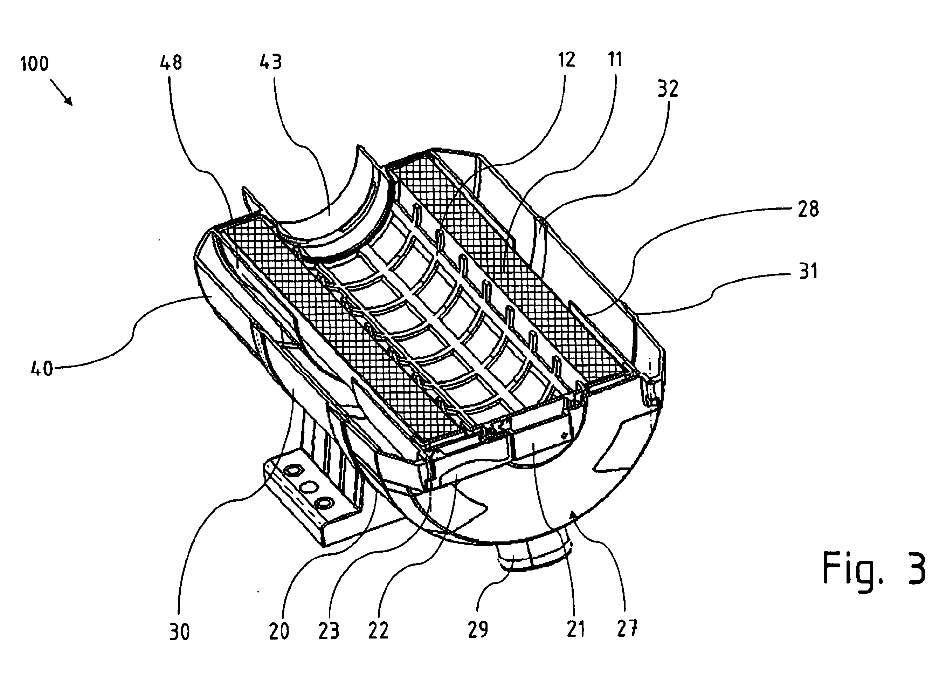

Die in Fig. 2 nur schematisch dargestellte Filtereinheit ist in Fig. 3 nochmals im Schnitt durch ein konkretes Ausführungsbeispiel gezeigt. Deutlich erkennbar ist an dem innen liegenden, ebenfalls geschnittenen Filterelement 10 das Mittelrohr 12, welches keine geschlossene Außenwandung aufweist, sondern eine Gitterstruktur hat, um eine radiale Luftströmung durch den Filterbalg 11 sowenig wie möglich zu behindern.

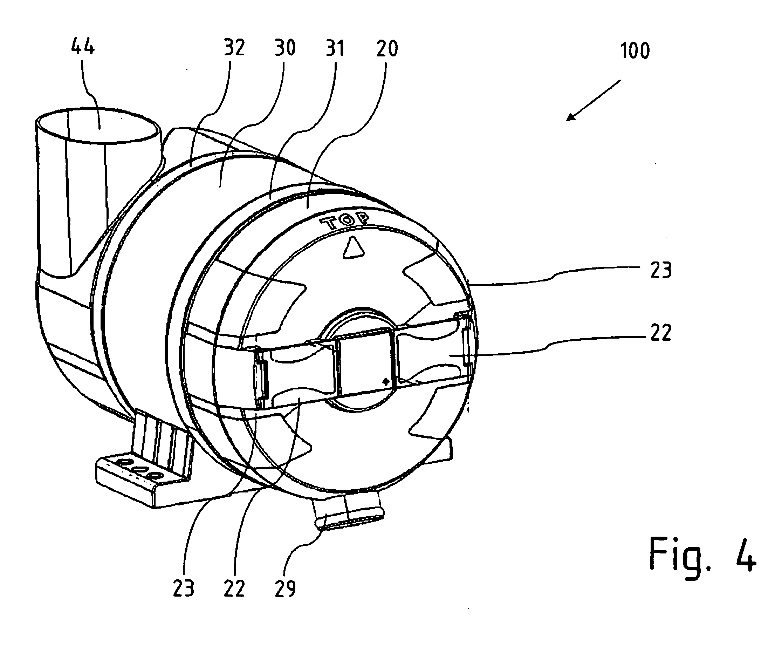

Im Bereich des Gehäuseteils 20 ist das Filterelement 10 von einem zusätzlichen Kragen 28 umfasst, so dass sich zwischen der Außenseite des Kragens 28 und der Gehäusewandung des Gehäuseteils 20 ein Ringspalt ergibt. Gleiches gilt für die gegenüber liegende Seite, wo ein Kragen 48 das Filterelement 10 umfasst. Bei tangentialer Einströmung der Rohluft am Einlaufstutzen 44 (vgl. Fig. 4) läuft die in das Gehäuse eingeleitete Luftmasse am Innenumfang der Gehäusewandung um, wodurch schwere Staubpartikel abgeschieden werden und an dem Abscheiderstutzen 29 abfließen können, und strömt dann radial von außen nach innen durch den Filterbalg 11.

Die Riegelelemente am Gehäuseteil 20 sind mit Klapplaschen 22 kombiniert, welche an einer Achse 23 mit der Stirnseite 27 des Gehäuseteils 20 verbunden sind. Die Funktion der Klapplaschen 22 wie auch allgemein die Funktion der erfindungsgemäßen Luftfiltereinheit 100 wird nachfolgend mit Bezug auf die folgenden Fig. 4 bis 6 erläutert:

Fig. 4 zeigt die Luftfiltereinheit mit ihren Gehäuseteilen 20, 30, 40 und dem darin eingesetzten Luftfilterelement 10. Die dargestellte Konfiguration zeigt dem Bediener, dass ein Luftfilterelement ordnungsgemäß eingesetzt ist, denn beim Fehlen des erfindungsgemäß ausgebildeten Luftfilterelements 10 würden die Gehäuseteile 20, 30, 40 in der in Fig. 4 dargestellten Lage nicht in axialer Verbindung miteinander stehen und nicht aneinander halten können.

Die Klapplaschen 22 liegen in Fig. 4 flach an einem zentralen Absatz 21 auf der Stirnseite 27 des Gehäuseteils 20 an. Dabei sind sie jeweils an einer im äußeren Umfangsbereich angeordneten Achse 23 gehalten.

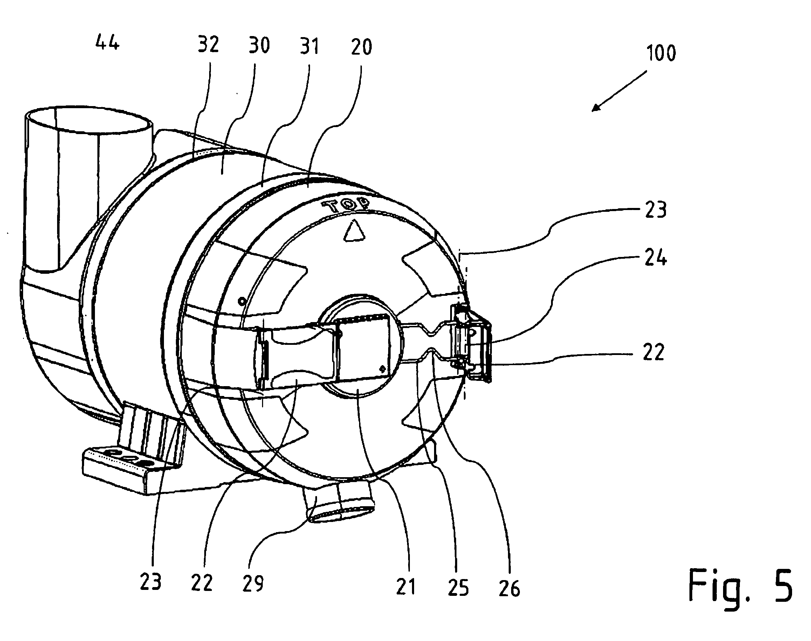

In Fig. 5 ist die rechte Klapplasche 22 in geöffneter Stellung dargestellt. Sie ist hier um die Achse 23 gegenüber dem Gehäuseteil 20 verschwenkt. Dadurch wird ein Klemmbügel 25 als Riegelelement mitbewegt, welcher an einer zweiten Achse 24 mit der Klapplasche 22 verbunden ist.

Der Klemmbügel 25 läuft durch schlitzförmige, hier nicht dargestellte Seitenausnehmungen am Absatz 21 des Gehäuseteils 20. Der Klemmbügel 25 ist aus Draht gebildet und durch die in Fig. 5 erkennbaren Einschnürungen 26 federnd gestaltet. Wird die Klapplasche beim Verschließen der Luftfiltereinheit 100 wieder an das Gehäuseteil 20 herangedrückt, so fährt der Klemmbügel 25 mit seiner Vorderkante in die entsprechende Profilierung 17 am Absatz 18 (vgl. Fig. 1) des im Inneren der Luftfiltereinheit eingesetzten Luftfilterelements ein.

Dadurch, dass zwei beabstandete Achsen 23, 24 vorgesehen sind, ist beim Anlegen der Klapplaschen 22 an die Stirnseite 27 durch den Benutzer ein Totpunkt zu überwinden, wodurch eine Selbsthemmung der einmal hergestellten Verriegelung über die Klapplaschen 22 verhindert wird und darüber hinaus dem Bediener signalisiert wird, dass die Verbindung zwischen Gehäuse und Luftfilterelement ordnungsgemäß hergestellt ist.

Nachdem beide Klapplaschen 22 in die geöffnete Stellung gebracht worden sind und dementsprechend die Klemmbügel 25 aus den Ausnehmungen 18 am Absatz 17 des Luftfilterelements herausgezogen sind, kann das Gehäuseteil 20 abgenommen werden. Vorteilhaft ist hierbei, dass der Bediener nur von der Stirnseite 27 des Gehäuseteils 20 her operieren braucht, also nur innerhalb desjenigen Einbauraums, der für das axiale Herausziehen und Einsetzen des Luftfilterelements 10 ohnehin benötigt wird. Damit kann der seitlich neben dem Luftfiltergehäuse 10 liegende Bauraum bis eng an die Gehäusewand vollständig genutzt werden.

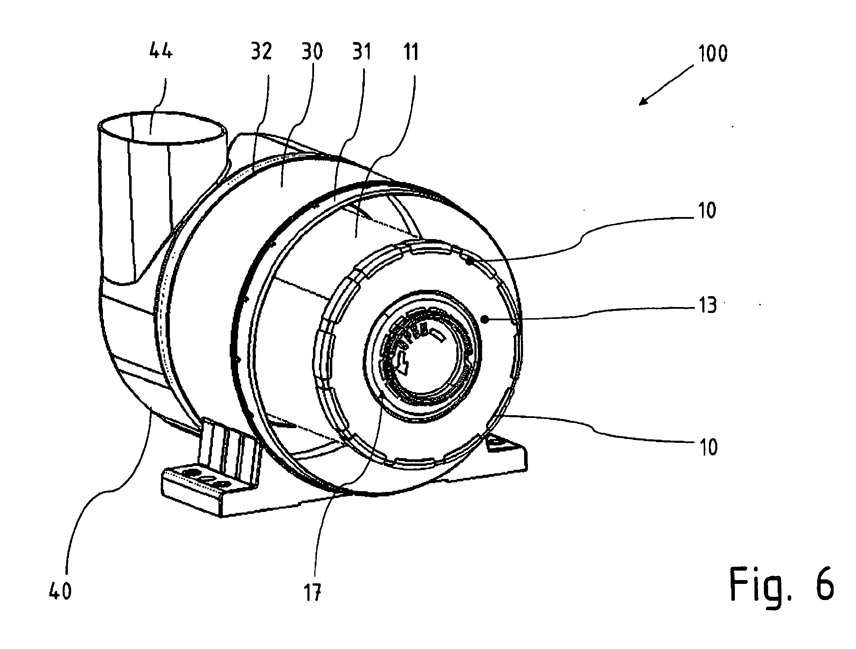

In Fig. 6 ist das geöffnete Gehäuse dargestellt, von dem das Gehäuseteil 20 abgenommen ist. Das Filterelement 10 mit seiner Endscheibe 13 und dem Absatz 17 liegt hier frei. Profilierungen am Außenrand der Endscheibe 13 und/oder am Absatz 17 erleichtern es dem Bediener, das Luftfilterelement 10 zu greifen und zu drehen, um die Gewindeverbindung zwischen dem Luftfilterelement 10 und dem Gehäuseboden 41 des Gehäuseteils 40 wieder zu lösen.

Dadurch, dass das Luftfilterelement 10 eingeschraubt wird, braucht der hintere, außen am Boden 41 befindliche Einbauraum, nicht zugänglich sein. Alle notwendigen Handgriffe im Zusammenhang mit dem Wechsel des Luftfilterelements 10 können somit von der Stirnseite 27 des Gehäuseteils 20 her ausgeführt werden.

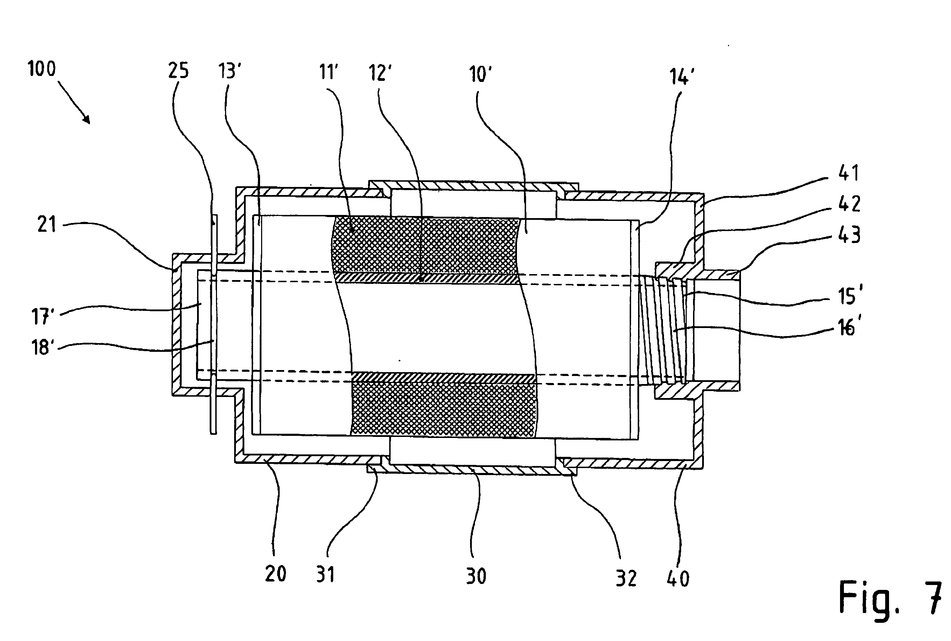

Fig. 7 zeigt analog zu Figur 2 eine zweite Ausführungsform eines Filterelements 10' in dem bereits zuvor beschriebenen Filtergehäuse 20 im Schnitt. Unterschiedlich ist, dass ein durchgängiges Mittelrohr 12' vorgesehen ist, an dem endseitig jeweils ein Kopplungsabsatz 15', 17' mit Kopplungselementen ausgebildet sind. Die Kopplungselemente sind beim gezeigten Beispiel wiederum ein konisches Gewinde 16' auf der einen Seite und eine Rille 17' für den Eingriff des Gehäuseriegels 25 auf der gegenüberliegenden Seite. Damit erfolgt über das starre Mittelrohr 12' eine Verspannung der Gehäuseteile 20, 30 und 40. Ein zylinderrohrförmiger Filterbalg 11' ist endseitig mit Endscheiben 13', 14' abdeckt und mit diesen so verbunden, dass keine verschmutzte Luft am Filterbalg 11' vorbei strömen kann. Im Bereich der Überdeckung durch den Filterbalg 11' ist das Mittelrohr 12' mit Ausnehmungen versehen, z.B. gitterförmig ausgebildet, so dass Luft vom Inneren des Mittelrohrs in den Filterbalg strömen kann bzw. umgekehrt. Über Absätze, Stifte etc. am Mittelrohr 12' kann das Paket aus Endscheiben 13', 14' und Filterbalg 11' axial zusammengepresst werden.

## Patentansprüche

1. Luftfilterelement mit einem Filterbalg (11, 11'), der endseitig jeweils mit einer Endscheibe (13, 13', 14, 14') abgedeckt ist, wobei das Luftfilterelement zylindrisch ist,
**dadurch gekennzeichnet, dass** die Endscheiben (13, 13', 14, 14') jeweils mit wenigstens einem Kopplungsabsatz (15, 15', 18, 18') zur formschlüssigen Koppelung mit einem Filtergehäuse (20, 20') versehen sind und über wenigstens ein den Filterbalg (11, 11') überspannendes, als sich durch eine zentrale Ausnehmung im Filterbalg erstreckendes Mittelrohr ausgebildetes Stabilisierungselement (12, 12') derart miteinander verbunden sind, dass das Filterelement für zwei Gehäuseteile eines Filtergehäuses in axialer Richtung als Zuganker dienen kann, wobei eine Endscheibe einen Gewindeabsatz mit einem konischen Gewinde als Kopplungselement zur Verbindung mit einem der Gehäuseteile aufweist und eine Endscheibe einen Kopplungsabsatz mit einer sich radial öffnenden Eingriffsausnehmung zum Eingreifen eines radial verschiebbaren Riegelelements aufweist.

2. Luftfilterelement nach Anspruch 1, **dadurch gekennzeichnet, dass** das konische Gewinde (16, 16') ein Sägezahngewinde ist.

3. Luftfilterelement nach einem der vorhergehenden Ansprüche, **dadurch gekennzeichnet, dass** die Eingriffsausnehmung durch eine am Kopplungsabsatz umlaufende Rille (18, 18') ausgebildet ist, welche zum Eingriff mit wenigstens einem Riegelelement (25, 25') am Gehäuse (20, 20') vorgesehen ist.

4. Luftfilterelement nach einem der vorhergehenden Ansprüche, **dadurch gekennzeichnet, dass** die Eingriffsausnehmung durch wenigstens eine sich radial erstreckende Schlitzausnehmung gebildet ist.

5. Luftfiltereinheit mit einem radial geteilten Gehäuse und einem darin eingesetzten, zylindrischen Filterelement (10, 10') nach einem der vorherigen Ansprüche mit einem Filterbalg (11, 11'), der endseitig jeweils mit einer Endscheibe (13, 13', 14, 14') verbunden ist, **dadurch gekennzeichnet, dass** das Gehäuse wenigstens zwei Gehäuseteile (20, 20', 30, 30', 40, 40') umfasst, die in axialer Richtung über ein Zugankerelement (12, 12') miteinander zu verbinden sind, wobei das Zugankerelement (12, 12') durch das Filterelement gebildet ist.

## Claims

1. Air-filter element with a filter bellows (11, 11') which is covered on either end with an end plate (13, 13', 14, 14'), the air-filter element having a cylindrical design,
**characterized in that** each one of the end plates (13, 13', 14, 14') is provided with at least one coupling shoulder (15, 15', 18, 18') for a positive-fit coupling with a filter housing (20, 20') and connected with each other via at least one stabilizing element (12, 12') covering the filter bellows (11, 11') and being formed as a central tube extending through a central recess in the filter bellows in such way that the filter element can serve as tie rod in axial direction for two housing components of a filter housing, the end plate featuring a threaded shoulder with a conical thread as coupling element for the connection with one of the housing components, and an end plate featuring a coupling shoulder with a radially opening engagement recess for allowing a radially mobile locking element to engage.

2. Air-filter element according to claim 1, **characterized in that** the conical thread (16, 16') is a buttress thread.

3. Air-filter element according to one of the above claims, **characterized in that** the engagement recess is formed by a groove (18, 18') surrounding the coupling shoulder, the groove being provided for engaging with at least one locking element (25, 25') at the housing (20, 20').

4. Air-filter element according to one of the above claims, **characterized in that** the engagement recess is formed by at least one slit recess extending radially.

5. Air-filter unit with a radially divided housing and a cylindrical filter element (10, 10') inserted therein according to one of the above claims with a filter bellows (11, 11') which is connected on either end with an end plate (13, 13', 14, 14'), **characterized in that** the housing comprises at least two housing components (20, 20', 30, 30', 40, 40') which are to be connected with each other in axial direction via a tie rod element (12, 12'), the tie rod element (12, 12') being formed by the filter element.

## Revendications

1. Élément de filtre à air avec un soufflet de filtre (11, 11') dont chaque extrémité est couverte d'un disque d'extrémité (13, 13', 14, 14'), l'élément de filtre à air étant cylindrique,
**caractérisé en ce que** chacun des disques d'extrémité (13, 13', 14, 14') est pourvu d'au moins un épaulement d'accouplement (15, 15', 18, 18') en vue de l'accouplement craboté avec un boîtier de filtre (20, 20') et que les disques d'extrémité sont reliés l'un à l'autre au moyen d'au moins un élément de stabilisation (12, 12') recouvrant le soufflet de filtre (11, 11') et formé comme un tube central traversant un évidement central ménagé dans le soufflet de filtre, de sorte que l'élément filtrant puisse servir de tirant, en sens axial, à deux parties d'un boîtier de filtre, un disque d'extrémité présentant un épaulement fileté doté d'un filet conique en tant qu'élément d'accouplement, pour former un assemblage avec l'une des parties du boîtier et un disque d'extrémité présentant un épaulement fileté doté d'un évidement d'engrènement s'ouvrant en sens radial permettant à un élément de verrouillage mobile en sens radial de s'engrener.

2. Élément de filtre à air selon la revendication 1, **caractérisé en ce que** le filet conique (16, 16') est un filet en dent de scie.

3. Élément de filtre à air selon l'une des revendications précédentes, **caractérisé en ce que** l'évidement d'engrènement est constitué par une rainure (18, 18') encerclant l'épaulement d'accouplement, laquelle est prévue pour s'engrener dans au moins un élément de verrouillage (25, 25') du boîtier (20, 20').

4. Élément de filtre à air selon l'une des revendications précédentes, **caractérisé en ce que** l'évidement d'engrènement est constitué par au moins un évidement à fente évoluant en sens radial.

5. Unité de filtre à air avec un boîtier divisé en sens radial et un élément filtrant (10, 10') cylindrique monté dans cette unité selon l'une des revendications précédentes, avec un soufflet de filtre (11, 11') dont chaque extrémité est reliée à un disque d'extrémité (13, 13', 14, 14'), **caractérisée en ce que** le boîtier comprend au moins deux parties de boîtier (20, 20', 30, 30', 40, 40') qui peuvent être reliées l'une à l'autre, en sens axial, au moyen d'un élément de tirant (12, 12'), l'élément de tirant (12, 12') étant formé par l'élément filtrant.
